Europäisches Patentamt

European Patent Office

Office européen des brevets

(19)

(11) Veröffentlichungsnummer: **0 415 026 B1**

(12)

# EUROPÄISCHE PATENTSCHRIFT

(45) Veröffentlichungstag der Patentschrift: **21.09.94**

(21) Anmeldenummer: **90112434.7**

(22) Anmeldetag: **29.06.90**

(51) Int. Cl.5: **B61L 5/18**, G08B 5/36, F21V 8/00, G09F 9/30, G08G 1/095, F21V 5/04, F21Q 3/00

(54) **Lichtsignalvorrichtung.**

(30) Priorität: **20.07.89 AT 1749/89**

(43) Veröffentlichungstag der Anmeldung:
**06.03.91 Patentblatt 91/10**

(45) Bekanntmachung des Hinweises auf die
Patenterteilung:
**21.09.94 Patentblatt 94/38**

(84) Benannte Vertragsstaaten:
**AT BE CH DE DK ES FR GB GR IT LI LU NL SE**

(56) Entgegenhaltungen:
**DE-A- 2 613 912**
**GB-A- 2 051 447**

(73) Patentinhaber: **DR.TECHN. JOSEF ZELISKO, FABRIK FÜR ELEKTROTECHNIK UND MA-SCHINENBAU GESELLSCHAFT m.b.H.**
**Steinfelder Gasse 12**
**A-2340 Mödling (AT)**

(72) Erfinder: **Pöltl, Johann**
**Maynologasse 36**
**A-2500 Baden (AT)**

(74) Vertreter: **Secklehner, Günter, Dr.**
**Rechtsanwalt,**
**Pyhrnstrasse 1**
**A-8940 Liezen (AT)**

## Beschreibung

Die Erfindung betrifft eine Signalanordnung mit einer in einem Lampengehäuse angeordneten Lampe, und mit einem von dieser distanzierten Strahler, mit einer Frontscheibe und einer zwischen dem Lampengehäuse und dem Strahler angeordneten Lichtübertragungsvorrichtung.

Bei bekannten Signalanordnungen ist es schwierig die meist von einer punktförmigen Lichtquelle ausgehenden Lichtstrahlen zu einem Parallellichtbündel zu formen um auch auf große Entfernungen eine entsprechend hohe Leuchtdichte und damit ein einwandfreies Erkennen des Signalbildes zu ermöglichen. Vor allem bei der Verwendung von mehrfachen Linsenanordnungen die sich über die gesamte Oberfläche des Strahlers der Signalanordnung erstrecken besteht immer wieder die Gefahr von Spiegelbildern bzw. unerwünschten Phantombildern, die durch von außen eintretende Lichtreflexe hervorgerufen werden können. Es ist bereits bekannt, zur Verhinderung solcher Spiegelbilder bzw. Phantombilder entsprechende konstruktive Maßnahmen vorzusehen. Diese sind jedoch sehr aufwendig und geben keine eindeutige Gewähr, daß derartige Spiegel- bzw. Phantombilder ausgeschaltet sind.

Es ist eine Signalanordnung mit einer in einem Lampengehäuse angeordneten Lampe bekannt - gemäß DE-A1 26 13 912 -, bei der ein vom Lampengehäuse distanzierter Strahler, mit einer Frontscheibe und einer zwischen dem Lampengehäuse und dem Strahler Lichtübertragungsvorrichtung, angeordnet ist. Die Lichtübertragungsvorrichtung umfaßt eine Mehrzahl von Lichtleitern. Dem Strahler ist an jedem zugewandten Ende des Lichtleiters je eine eigene unabhängige Linse zugeordnet, die an der Lichtaustrittsseite des optischen Systems als Fesnellinse ausgebildet ist. Der Außendurchmesser der Linse entspricht einem Hüllkreisdurchmesser des Lichtbündels in einer der Brennweite entsprechenden Distanz von der Lichtanstrittsfläche. Die Linsen sind annähernd hyperbel- oder kugelkalotten- bzw. parabelförmig ausgebildet.

Weiters ist eine Signalanordnung mit einer in einem Lampengehäuse angeordneten Lampe bekannt - gemäß GB-A 2 051 447 - bei der vom Lampengehäuse distanzierter Strahler, mit einer Frontscheibe und einer zwischen dem Lampengehäuse und dem Strahler Lichtübertragungsvorrichtung, angeordnet ist, wobei die Lichtübertragungsvorrichtung eine Mehrzahl von Lichtleitern umfaßt. Dem Strahler ist an jedem zugewandten Ende des Lichtleiters je eine eigene unabhängige Linse zugeordnet, die annähernd hyperbel-, kugelkalotten- oder parabelförmig ist und das Ende jedes Lichtleiters ist im endlichen Brennpunkt des Strahlers angeordnet.

Der vorliegenden Erfindung liegt nunmehr die Aufgabe zugrunde, unter Verwendung der über ein Bündel von Lichtleitern zugeführten Lichtstrahlen ein großflächiges Signalbild zu schaffen, welches auch aus unterschiedlichen Stellungen und weiten Entfernungen gut sichtbar ist und aus wenigen Teilen kostengünstig herstellbar ist.

Diese Aufgabe der Erfindung wird durch die Merkmalen des Patentanspruches 1 gelöst. Durch diese überraschend einfach erscheinende Lösung wird mit Vorteil erreicht, daß aus dem von der Signalanordnung bzw. dessen Strahler austretenden Parallellichtbündel ein Teil der Lichtstrahlen in einer dazu winkeligen Richtung abgeleitet werden kann, um aus unterschiedlichen Stellungen und/oder Entfernungen zur Signalanordnung das Signalbild einwandfrei erkennen zu können. Vor allem eröffnet diese Anordnung in einfacher Weise das Erkennen des Signalbildes von einer Stellung seitlich neben der Signalanordnung auch aus geringen Entfernungen vom Signalbild.

Dazu kommt, daß in überraschender und nicht vorhersehbarer Weise durch die Anordnung vieler kleiner Linsen die jeweils einem Lichtleiterende zugeordnet sind, die Bildung von Spiegel- und Phantombildern gleichzeitig ohne zusätzliche Maßnahmen verhindert werden kann.

Eine vorteilhafte Weiterbildung ist im Patentanspruch 2 beschrieben, weil dadurch die auf die Frontscheibe projizierte Fläche der Umlenklinse kleiner ist als der Strahlenbündelquerschnitt und bevorzugt zwischen 5 und 50 % beträgt, wodurch die Aussendung des Gesamtbildes durch die von diesen abgelenkten Lichtstrahlen nicht nachteilig verringert wird.

Vorteilhaft ist auch eine Ausbildung nach Patentanspruch 3, da die Justierung und Ausrichtung der einzelnen Linsen zueinander dadurch wesentlich erleichtert wird und die Ausrichtung der Strahlenbündel auch bei Erschütterungen nicht verändert wird, wodurch außerdem eine exakte und einfache Montage erreicht wird.

Von Vorteil ist aber auch eine Ausbildung nach Patentanspruch 4, da dadurch die Ausrichtung der Enden der Lichtleiter auf die Brennpunktlage der Linsen keiner zusätzlichen Aufwendungen bedarf und trotzdem ein optimaler Strahlungsverlauf sichergestellt wird.

Weiters ist eine Weiterbildung nach Patentanspruch 5 möglich, da dadurch gleichzeitig mit der Montage eine exakte Ausrichtung der Lichtleiterenden zu den Lisen bzw. zur Frontscheibe sichergestellt werden kann.

Schließlich ist aber auch eine Ausbildung nach Patentanspruch 6 von Vorteil, wodurch unabhängig von Verlagerungen der Frontscheibe relativ zur Grundplatte sichergestellt ist, daß sich die Linsen immer im Brennpunktabstand vor den Enden der Lichtleiter befinden.

Weiters ist es auch möglich, daß die Führungsplatte in ein Gehäuse für die Frontscheibe integriert ist und vorzugsweise eine Bodenplatte des Gehäuses bildet, wodurch gleichzeitig mit der Montage eine exakte Ausrichtung der Lichtleiterenden zu den Linsen bzw. zur Frontscheibe sichergestellt werden kann.

Weiters ist es auch möglich, daß die Distanz zwischen den Linsen und der Führungsplatte durch über die Führungsplatte in Richtung der Linsen vorragende sich in den Zwickelbereichen zwischen den einzelnen Linsen abstützende Stützstege eingehalten ist, wodurch unabhängig von Verlagerungen der Frontscheibe relativ zur Grundplatte sichergestellt ist, daß sich die Linsen immer im Brennpunktabstand vor den Enden der Lichtleiter befinden.

Zum besseren Verständnis der Erfindung wird diese im nachfolgenden anhand der in den Zeichnungen dargestellten Ausführungsbeispiele näher erläutert.

Es zeigen:

Fig. 1    eine erfindungsgemäße Signalanordnung mit Signallichter, die über ein Bündel von Lichtleitern mit einer Lichtquelle verbunden sind in Stirnansicht;

Fig. 2    die Signalanordung, gemäß Fig.1 in Seitenansicht;

Fig. 3    das zwischen dem Signallicht und der Lichtquelle angeordnete Bündel von Lichtleitern mit dem Strahler in Seitenansicht, teilweise geschnitten;

Fig. 4    den Strahler nach Fig.3 in Seitenansicht geschnitten und in vergrößertem Maßstab;

Fig. 5    einige Linsen des Strahlers in Seitenansicht, geschnitten gemäß den Linien V-V in Fig.6;

Fig. 6    einen Teil des Strahlers in Stirnansicht geschnitten, gemäß den Linien VI-VI in Fig.5;

Fig. 7    eine Linse des Strahlers mit dem diesen zugeordneten Ende des Lichtleiters in Seitenansicht, geschnitten, mit dem Strahlenverlauf der Lichtstrahlen in schematisch vereinfachter Darstellung.

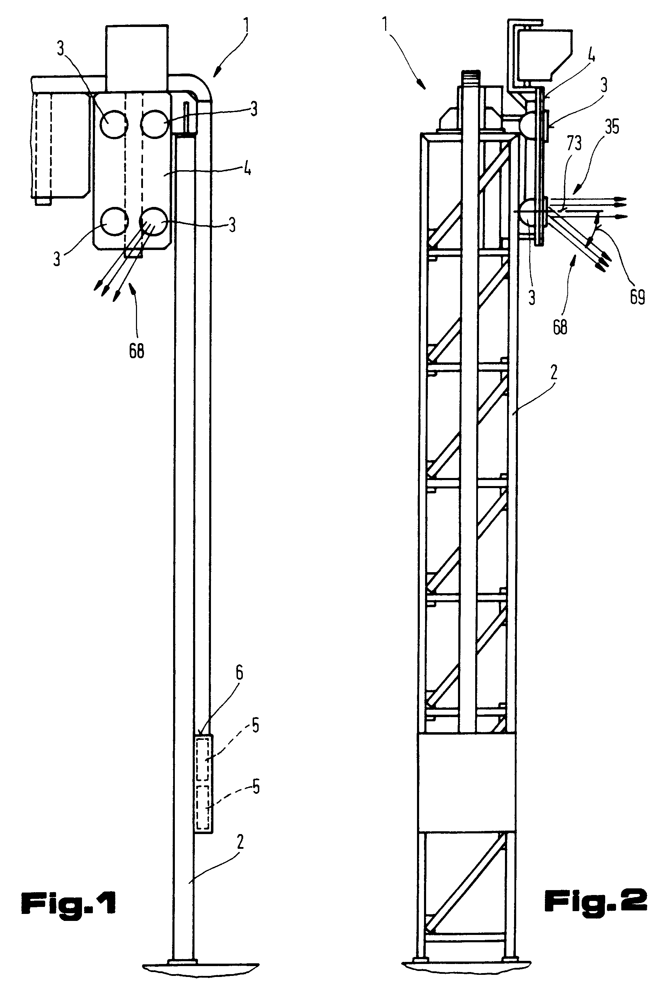

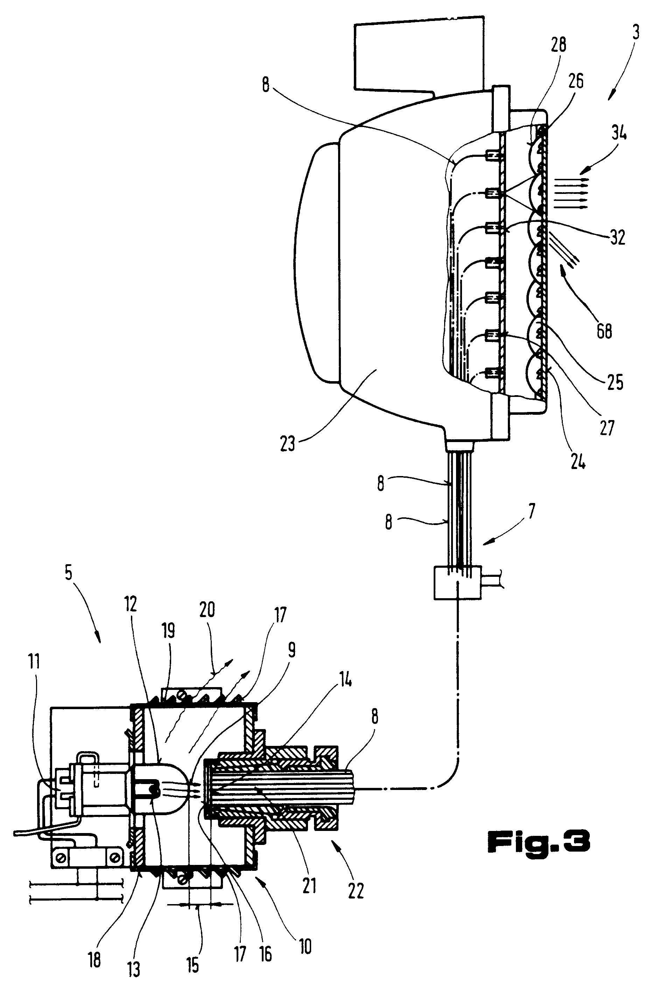

In Fig.1 und 2 ist eine Signalanordnung 1 gezeigt, wie sie beispielsweise bei den Eisenbahnen zum Einsatz kommt. Diese Signalanordnung 1 umfaßt ein Traggerüst 2, an welchem im Abstand oberhalb der Gleise Strahler 3 angeordnet sind. Bedingt durch die immer höher werdenden Geschwindigkeiten von Eisenbahnzügen wird die Wartung, insbesondere der Lampentausch bei derartigen Signallichtern, in welchen die Lampen unmittelbar im Bereich eines Signalschildes 4 angeordnet sind, immer schwieriger. Vielfach bedürfte es zum Austauschen der Lampen in derartigen Strahlern 3 der Unterbrechung des Zugsverkehrs auf dieser Strecke, sodaß ein gefahrloses Austauschen durch die Bedienungsperson möglich ist.

Um diesem Übelstand abzuhelfen und eine Wartung bzw. einen Lampentausch für die Strahler 3 völlig unabhängig vom Zugverkehr durchführen zu können, sind bei neuen Signalanordnungen 1 Lampenanordnungen 5 im Bereich des Traggerüstes 2 bzw. unmittelbar neben diesen vorgesehen, die am Boden aufgestellt oder in einer vom Boden aus ohne zusätzliche Hilfsmittel zugänglichen Höhe in einem Schaltkasten 6 angeordnet sind.

Wie nun besser aus Fig.3 zu ersehen ist, erfolgt die Verbindung zwischen einer Lampenanordnung 5 und einem Strahler 3 durch ein Bündel 7 aus Lichtleitern 8. Um eine derartige Verbindung wirkungsvoll zu gestalten, ist es notwendig, daß schematisch durch Pfeile angedeutete Lichtstrahlen 9 möglichst ungehindert und ohne Verlust in das Bündel 7 aus Lichtleitern 8 eintreten können. Dazu ist vorgesehen, daß die Lampenanordnung 5 ein Lampengehäuse 10 aufweist, in der über einen Bajonettverschluß 11 seine Lampe 12, meist eine Halogenlampe, mit einem Leuchtfaden 13 angeordnet ist. Da beim Betrieb der Lampe 12 eine entsprechend hohe Wärmeenergie frei wird, ist es notwendig eine Stirnseite 14 des Bündels 7 aus Lichtleitern 8 in einer Distanz 15 von der Lampe 12 anzuordnen. Um aufgrund der dabei doch auftretenden, relativ hohen Temperaturen ein Anschmelzen der Lichtleiter 8 im Bereich der Stirnseite 14 zu verhindern, ist zwischen der Lampe 12 und der Stirnseite 14 eine Filteranordnung 16 angeordnet. Dieser Filter kann auch gleichzeitig dazu dienen, nur die gewünschte Farbe aus dem Lichtbündel herauszufiltern. Zusätzlich ist das Lampengehäuse 10 derart angeordnet, daß Lüftungsschlitze 17 in Seitenwänden 18,19 in vertikaler Richtung übereinander angeordnet sind. Dadurch kann die im Inneren des Lampengehäuses 10 erhitzte Luft, die schematisch durch Pfeil 20 angedeutet ist, nach oben entweichen, bzw. es wird durch die Thermosifonwirkung immer wieder kühle Luft in das Lampengehäuse 10 hineingezogen.

Um eine möglichst hohe Lichtausbeute bzw. einen möglichst geringen Lichtverlust beim Übergang von der Lampe 12 in das Bündel 7 aus Lichtleitern 8 zu ermöglichen, ist ein Ende 21 des Bündels 7 aus Lichtleitern 8 in einer Haltevorrichtung 22 eingespannt und gehalten.

Das Bündel 7 aus Lichtleitern 8 führt zum Strahler 3, welcher aus einem Gehäuse 23, einer Frontscheibe 24, einer Linsenanordnung 25 und einer Linsentragplatte 26 besteht.

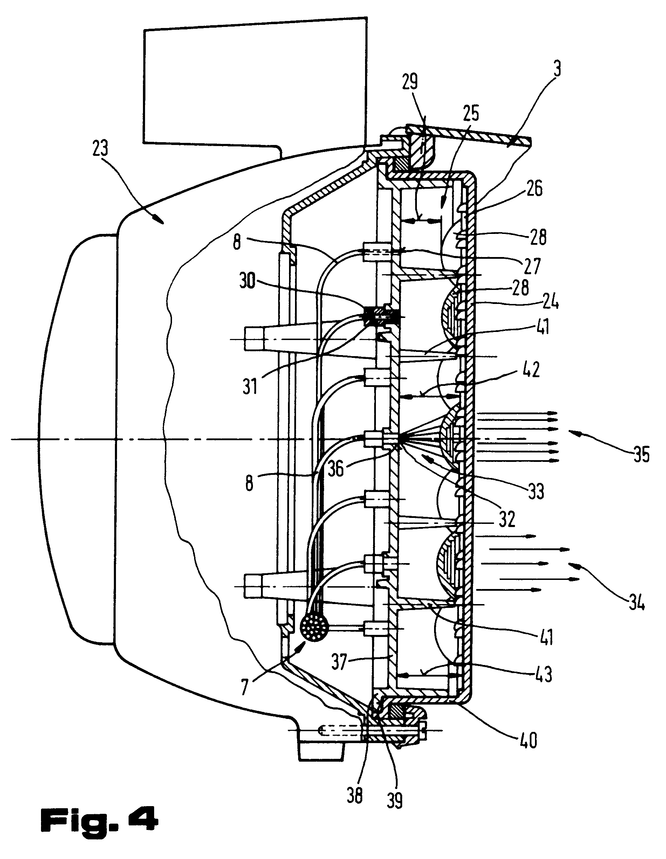

Wie besser aus Fig.4 zu ersehen ist, sind in der Linsentragplatte 26 in einer einen Abstand von einem Brennpunkt 27 und den einzelnen Linsen 28 der Linsenanordnung 25 entsprechenden Distanz 29 Führungsnippel 30 mit einer Bohrung 31 für jeweils einen Lichtleiter 8 angeordnet. Mittels dieser Führungsnippel 30 sind somit die der Haltevorrichtung 22 gegenüberliegenden Enden der Lichtleiter 8 unter Bezug auf die einzelnen Linsen 28 genau positioniert. Das der Frontscheibe 24 zugewandte Ende 32 eines Lichtleiters 8 befindet sich somit in dem endlichen Brennpunkt 27 der Linse 28.

Das aus den Enden 32 der Lichtleiter 8 austretende Lichtbündel 33 bewirkt eine vollständige Ausleuchtung der der Frontscheibe 24 zugewandten Oberfläche der Linsen 28, sodaß von den Linse 28 im wesentlichen aus Parallellicht bestehende Strahlenbündel 34,35 ausgesendet werden.

Die Führungsnippel 30 sind in Führungsöffnungen 36 einer Führungsplatte 37, die gleichzeitig eine Bodenplatte des Strahlers 3 bilden kann, gehaltert. Die von den einzelnen Führungsnippeln 30 wegführenden Lichtleiter 8 werden vor dem Austritt aus dem Gehäuse 23 des Strahlers 3 zu einem Bündel 7 aus Lichtleitern 8 zusammengefaßt.

Die Führungsplatte 37 weist einen umlaufenden Ansatzring 38 auf, der in einer ringförmigen Ausnehmung 39 einer die Frontscheibe 24 lagernden Halterung 40 eingesetzt ist.

Die Halterung 40 und die Frontscheibe 24 können auch einstückig - wie beim vorliegenden Ausführungsbeispiel - ausgebildet sein.

In einer Vertiefung der Halterung 40 ist die Linsentragplatte 26 eingelegt und in radialer Richtung geführt. Zur spielfreien Anlage der Linsentragplatte 26 auf der der Führungsplatte 37 zugewandten Seite der Frontscheibe 24 ist die Führungsplatte 37 mit Stützstegen 41 versehen, die eine Länge 42 aufweisen, die um eine Dicke der Linsentragplatte 26 kürzer ist als eine Distanz 43 zwischen der Frontscheibe 24 und der dieser zugewandten Seite der Führungsplatte 37. Durch diese eindeutige Positionierung und Halterung der Linsentragplatte 26 gegenüber der Führungsplatte 37 wird auch ein exaktes Einhalten der Distanz 29 zwischen den Brennpunkten 27 im Bereich der Enden 32 der einzelnen Lichtleiter 8 und den Linsen 28 sichergestellt.

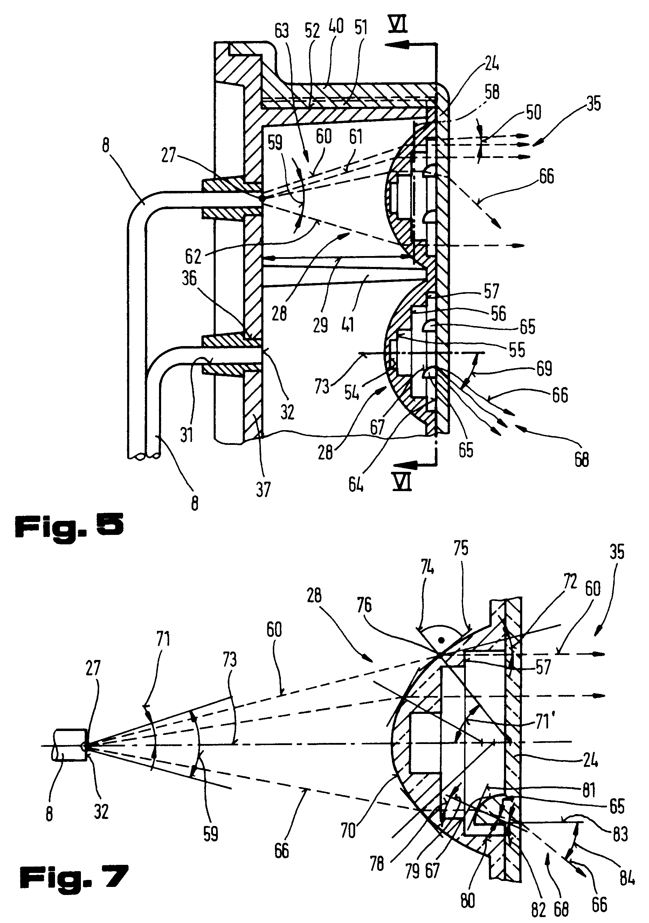

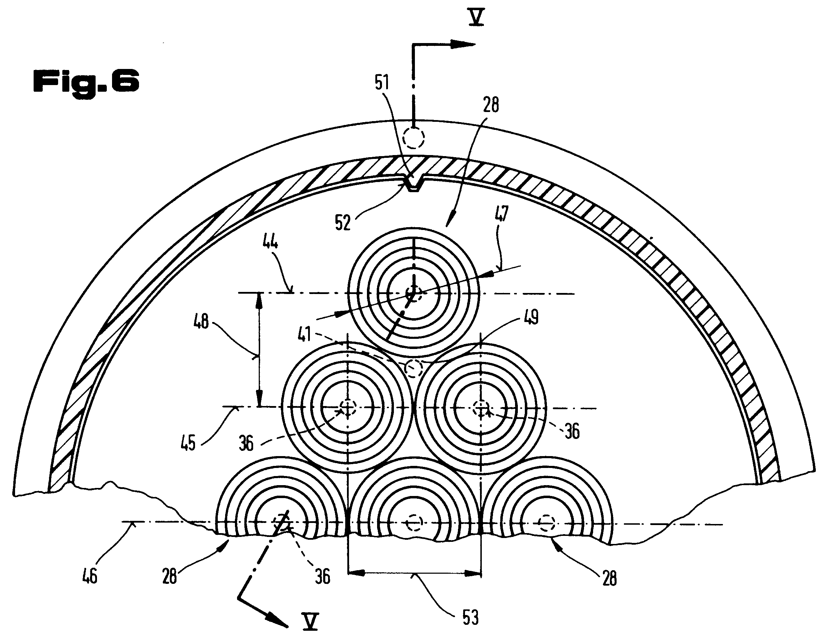

Wie besser aus den Fig.5 und 6 zu ersehen ist, sind die einzelnen Linsen 28 in, in Fig.6 durch strichpunktierte Linien eingezeichneten, Reihen 44,45,46 angeordnet. Alle Linsen 28 weisen einen gleichen Außendurchmesser 47 auf. Die in den einander unmittelbar benachbarten Reihen 44,45 bzw. 46 angeordneten Linsen 28 sind jeweils um die Hälfte ihres Außendurchmessers 47 gegeneinander versetzt. Außerdem ist eine Entfernung 48 zwischen den einzelnen Reihen 44,45 bzw. 46 kleiner als der Außendurchmesser 47, und zwar derart, daß die beispielsweise in der Reihe 45 angeordneten Linsen die diesen unmittelbar benachbarten beiden Linsen 28 in den benachbarten Reihen 44 bzw. 46 jeweils berühren bzw. tangieren. Dadurch verbleiben zwischen den einzelnen Linsen 28 nur relativ kleine Zwickelbereiche 49, von denen keine Lichtstrahlen ausgesandt werden.

Wie nachfolgend noch näher erläutert werden wird, weisen die Strahlenbündel 35, wie dies, insbesondere aus Fig.4 und 5 zu ersehen ist, in Abhängigkeit vom Lichtleiterdurchmesser einen Divergenzwinkel 50 von +/- 1 bis +/- 3 Grad bzw. mehr auf, bevorzugt bei einem Lichtleiterdurchmesser von 2,5 mm etwa 2 Grad. Bei einem Divergenzwinkel von 2 Grad erscheint die Frontscheibe 24 bereits aus einer Entfernung von in etwa 3 m von der Frontscheibe als voll ausgeleuchtet, da sich die kegelförmig erweiternden Strahlenbündel 35 bereits vollflächig überschneiden.

Wie weiters durch strichlierte Linien angedeutet, stützen sich in diesen Zwickelbereichen 49 auch die anhand der Fig.4 beschriebenen Stützstege 41 ab.

Um nunmehr eine exakte Ausrichtung der einzelnen Linsen 28 auf die Führungsöffnungen 36 in der Führungsplatte 37 zu ermöglichen, ist die Halterung 40 für die Frontscheibe 24 mit einer nach innen, in Richtung der Linsen 28 vorspringenden Führungsnase 51 versehen. Dementsprechend ist die Führungsplatte 37 mit einer gegengleichen Ausnehmung 52 ausgestattet, wodurch beim Einlegen der Führungsplatte 37 in die Halterung 40, bzw. bei deren Anlage an der Frontscheibe 24 diese nur in einer bestimmten radialen Ausrichtung gegenüber der Frontscheibe 24 positioniert werden kann.

Die Führungsöffnungen 36 mit den Enden 32 der Lichtleiter 8 sind in einer Entfernung 48 in den Reihen 44 bis 46 angeordnet und in den einzelnen Reihen in einem etwa dem doppelten Außendurchmesser 47 entsprechenden Abstand 53 angeordnet.

Durch diese Ausführung wird eine jeweils zentrische und dem Brennpunktabstand entsprechende Zuordnung der Enden 32 der Lichtleiter 8 zu den Linsen 28 sichergestellt.

Wie aus dieser Darstellung weiters ersichtlich ist, sind die Linsen 28 als Fresnellinsen, bzw. Stufenlinsen ausgebildet. Derartige Stufenlinsen sind preisgünstiger herzustellen und erlauben eine Einsparung an Gewicht und vor allem Baulänge. Prinzipiell kann man sie als eine in Ringzonen 54 bis 57 aufgeteilte und nahezu auf die gleiche Ebene zusammengeschobene Linse ansehen. Im vorliegenden Ausführungsfall ist das als Parallelbündel ausgebildete Strahlenbündel 35, welches, wie bereits vorher erwähnt, einen Divergenzwinkel 50 von unter 10 Grad, bevorzugt 2 Grad aufweist, auf die Seite der Ringzonen 54 bis 57 verlegt, während die Distanz 29 dem Abstand zwischen dem Brennpunkt 27 und einer durch eine strich-zwei punktierte Linie eingetragenen Hauptebene 58 der Linse, also dem Brennpunktabstand, entspricht. Dies bewirkt, daß die unter einem bestimmten Öffnungswinkel 59 aus den Enden 32 der Lichtleiter austretenden Lichtstrahlen, von welchen der besseren Übersichtlichkeit wegen schematisch drei Lichtstrahlen 60 bis 62 dargestellt sind, in den transparenten Linsen 28 im wesentlichen parallel zueinander höchstens mit einer geringfügigen Divergenz von kleiner 10 Grad ausgerichtet werden. Der Öffnungswinkel dieses durch eine Vielzahl von Lichtstrahlen 60 bis 62 gebildeten Lichtbündels 63 wird zum überwiegenden Teil durch die verwendeten Lichtleiter 8 festgelegt und beträgt zwischen 10 Grad und 40 Grad bevorzugt 26 Grad. Durch die Wahl der den Brennpunktabstand entsprechenden Distanz 29 wird aufgrund des Öffnungswinkels 59 erreicht, daß bei der festgelegten Distanz zwischen den Enden 32 der Lichtleiter 8 und der Frontscheibe 24 eine Ausleuchtung der Linsen 28 über die gesamte Oberfläche sichergestellt werden kann.

Aus den Fig.5 und 6 ist weiters zu ersehen, daß auf einer den Linsen 28 zugewandten Oberfläche 64 der Frontscheibe 24 Umlenklinsen 65 angeordnet sind. Diese Umlenklinsen 65, weisen den Lichtleiterenden zugewandte Zylindermantel- bzw. Kugelkalottenflächen auf. Mit diesen Umlenklinsen 65 werden einzelne, schematisch angedeutete Lichtstrahlen 66 in einem einer Oberfläche 67 entsprechenden Ausmaß zu einem Lichtstrahlenbündel 68 geformt, welches unter einem Ablenkungswinkel 69 zum Strahlenbündel 35 verläuft. Wie insbesondere der Darstellung in Fig.2 zu entnehmen ist, verläuft die optische Achse 73 des Strahlenbündels 35 in etwa senkrecht zum Signalschild 4, während, wie schematisch angedeutet, die von jeder Linse 28 abgestrahlten Lichtstrahlenbündel 68 einen Ablenkungswinkel 69 von ca. 30 bis 45 Grad, bevorzugt 35 Grad, aufweisen und somit ein Erkennen des Signalbildes auch aus unmittelbarer Nähe vor dem Signal, insbesondere bei Eisenbahnsignalen von dem Führerstand von Lokomotiven oder bei Straßensignalen vom Fahrersitz aus möglich ist.

Die Ablenkung des Lichtstrahlenbündels 68 erfolgt aber nicht nur in einer senkrechten Vertikalebene, sondern entlang einer Geraden, die auch in einer parallel zum Signalschild verlaufenden Ebene geneigt ist. Dies ist vor allem aus der schematischen Darstellung des Lichtstrahlenbündels in Fig.1 und der Zusammenschau in Fig.4 und 5 ersichtlich.

In Fig.7 ist anhand jeweils eines Lichtstrahls 60 des Strahlenbündels 35 und eines Lichtstrahls 66 des Lichtstrahlenbündels 68 die optische Auslegung der Linse 28 bzw. der Umlenklinsen 65 gezeigt. Der vom Ende 32 kommende, bzw. den Brennpunkt 27 durchschreitende Lichtstrahl 60 trifft auf der diesem Ende 32 des Lichtleiters 8 zugewandten Oberfläche 70 der Linse 28 auf.

Ist nun die Oberfläche 70 der Linse 28 so ausgelegt, daß ein Einfallswinkel 71 des den Brennpunkt 27 verlassenden Lichtstrahls 60 beim Auftreffen auf die Oberfläche 70 um einen gleich großen Auftreffpunkt 72 in Richtung der optischen Achse 73 hinabgelenkt wird, so treten die auf der Oberfläche 70 auftreffenden Lichtstrahlen 60 in etwa parallel zur optischen Achse 73 aus der Linse 28 aus. Um ein derartiges Parallellicht -Strahlenbündel zu erzeugen, muß die Forderung arc

$$\sin\left[\frac{\sin(\alpha + \beta) \times n_1}{n_2}\right] - \beta = 0$$

erfüllt sein. In dieser Formel entspricht $n_1$ und $n_2$ den Brechungszahlen der von den Lichtstrahlen 60 bis 62 aufeinanderfolgend durchdrungenen Medien, nämlich der Luft mit der Brechungszahl 1 und der Linse 28 mit der Brechungszahl von z.B. 1,586. Der Winkel $\alpha$ entspricht einem Einfallswinkel 71, und der Winkel $\beta$ ist der Winkel 71' zwischen der optischen Achse 73 und einer Normalen 74 auf eine Tangente 75, die in einem Schnittpunkt 76 zwischen der Oberfläche 70 und dem Lichtstrahl 60 an die Oberfläche 70 angelegt wird.

Zur vereinfachten Auslegung einer derartigen Linse 28 ist es nun möglich, daß man diese in sehr guter Annäherung dadurch bestimmt, daß man schrittweise eine Tangente durch einen ersten Schnittpunkt eines Strahls mit der Oberfläche 70 unter Berechnung des Winkels $\beta$ legt und diese Tangente mit einem weiteren Lichtstrahl, der beispielsweise unter einem 0,5 Grad größeren Winkel $\beta$ zur optischen Achse 73 verläuft, schneidet und in dem so gefundenen Schnittpunkt wiederum unter Berechnung des Winkels eine Tangente zur Flächennormale errichtet, die wiederum unter einem nur 0,5 Grad größeren Winkel zur optischen Achse 73 verläuft. Setzt man dieses Verfahren von der optischen Achse 73 ausgehend bis zum maximalen Öffnungswinkel 59 fort, so erhält man eine Raumform für die benötigte Linse 28. Diese Linse 28 ist dann ausgehend von einem mit dem Öffnungswinkel 59 vom Ende 32 des Lichtleiters 8 abgestrahlten Lichtbündel in der Lage, ein Strahlenbündel 35 mit überwiegend parallel zur optischen Achse 73 ausgerichteten Lichtstrahlen 60 auszusenden.

Wird die Schrittweite der einzelnen zur Ermittlung der Oberfläche 70 der Linse 28 verwendeten Lichtstrahlen möglichst eng, z.B. mit 0,5 Grad gewählt, so weicht eine Einhüllkurve von einer kontinuierlich gekrümmten Oberfläche praktisch nicht mehr ab.

Bei dieser Auslegung der Linse 28 ist ein Ablenkwinkel 72, um den der Lichtstrahl 60 beim Eintritt in das festere Medium in Richtung der Normalen 74 abgelenkt wird, derart, daß der aus der Linse 28 austretende Lichtstrahl 60 praktisch parallel zur optischen Achse 73, bzw. mit einer geringfügigen Divergenz von 1 bis 3 Grad, bevorzugt 2 Grad, austritt. Nachdem der Lichtstrahl 60 dann die Ringzonen 54 bis 57 und die Frontscheibe 24 praktisch senkrecht durchtritt, erfolgt in diesen Bereichen keine Ablenkung des Lichtstrahls 60.

In gleicher Weise wird auch ein Lichtstrahl 66 durch die Linse 28 abgelenkt. Dieser trifft dann auf der Oberfläche 67 der Umlenklinse 65 auf und wird um einen Anteil des Einfallswinkels 78 in Richtung einer Normalen 79, also um einen Ablenkungswinkel 80 umgelenkt. Die Normale 79 wird dabei auf eine durch den Schnittpunkt des Lichtstrahls 66 mit der Oberfläche 67 errichteten Tangente 81 bezogen. Da nunmehr der Lichtstrahl 66 beim Übertritt aus der Frontscheibe 24 in ein anderes Medium, nämlich Luft, schräg auf die Frontscheibe 24 auftrifft, wird er durch einen einem Einfallswinkel 82 zwischen einer auf die Frontscheibe 24 errichteten Normalen 83 entsprechenden Ausfallswinkel 84 umgelenkt. Da der Lichtstrahl beim Austreten von einem festen Medium in Luft von der Normale 83 weg abgelenkt wird, so wird er näher in Richtung der Linse 28 verschwenkt. Dadurch treten die bereits vorstehend und anhand der Fig.2 schematisch eingezeichneten Wirkungen auf.

Wie insbesondere der Darstellung in Fig.5 und Fig.6 zu entnehmen ist, umfaßt eine auf die Frontscheibe 24 projizierte Fläche der Umlenklinsen 65 nur einen geringen Teil der auf die Frontscheibe 24 projizierten Fläche der Linse 28 und beträgt bevorzugt zwischen 10 % und 60 %, z.B. 40 %.

Selbstverständlich ist es im Rahmen der Erfindung auch möglich, die zusätzlichen Umlenkprismen unabhängig von der Frontscheibe auf einer eigenen Tragplatte anzuordnen, bzw. auf einer scheibenförmigen, in die äußerste Ringzone der Linse 28 einzusetzenden Trägerplatte.

Des weiteren ist es auch möglich, daß die Umlenklinsen 65 unterschiedliche Prismenwinkel bzw. Oberflächenkrümmungen aufweisen, sodaß von einer Linse 28 aus in mehreren unterschiedlichen Richtungen Lichtstrahlenbündel 68 ausgesandt werden können.

Es ist aber andererseits auch möglich, daß verschiedenen Linsen 28 unterschiedlich gestaltete Umlenklinsen 65 zugeordnet sind, sodaß über einen bestimmten Entfernungsbereich von der Signalanordnung 1 jeweils von unterschiedlichen Linsen 28 Lichtstrahlenbündel 68 abgesandt werden.

Üblicherweise erfolgt die Ausrichtung der optischen Achse 73 der von den einzelnen Linsen 28 ausgehenden Strahlenbündel 35 durch eine Verschwenkung des gesamten Strahlers 3. Um diese Ausrichtung vorzunehmen, ist auf dem Strahlers 3 eine Visiervorrichtung angeordnet, beispielsweise ein Fernrohr, mit dem ein Zielpunkt anvisiert werden kann, auf den dieser Strahler 3 ausgerichtet werden soll. Andererseits ist es aber auch möglich, für bestimmte Einsatzzwecke die optischen Achsen 73 der Strahler 3 in unterschiedlichen Winkelstellungen zur Frontscheibe 24 anzuordnen, sodaß sich bei Anordnung eines Strahlers 3 neben einer Straße bei einer bestimmten Entfernung vom Strahler 3 die Strahlenbündel 35 im Gesichtsfeld des Fahrers von kleineren bzw. größeren Fahrzeugen befinden.

**Bezugszeichenaufstellung**

| | |
|---|---|
| 1 | Signalanordnung |
| 2 | Traggerüst |
| 3 | Strahler |
| 4 | Signalschild |
| 5 | Lampenanordnung |
| 6 | Schaltkasten |
| 7 | Bündel |
| 8 | Lichtleiter |
| 9 | Lichtstrahl |
| 10 | Lampengehäuse |
| 11 | Bajonettverschluß |
| 12 | Lampe |
| 13 | Leuchtfaden |
| 14 | Stirnseite |
| 15 | Distanz |
| 16 | Filteranordnung |
| 17 | Lüftungsschlitz |
| 18 | Seitenwand |
| 19 | Seitenwand |
| 20 | Pfeil |
| 21 | Ende |
| 22 | Haltevorrichtung |
| 23 | Gehäuse |
| 24 | Frontscheibe |
| 25 | Linsenanordnung |
| 26 | Linsentragplatte |
| 27 | Brennpunkt |
| 28 | Linse |
| 29 | Distanz |
| 30 | Führungsnippel |
| 31 | Bohrung |
| 32 | Ende |
| 33 | Lichtbündel |
| 34 | Strahlenbündel |
| 35 | Strahlenbündel |
| 36 | Führungsöffnung |
| 37 | Führungsplatte |
| 38 | Ansatzring |
| 39 | Ausnehmung |
| 40 | Halterung |
| 41 | Stützsteg |

| 42 | Länge |
| 43 | Distanz |
| 44 | Reihe |
| 45 | Reihe |
| 46 | Reihe |
| 47 | Außendurchmesser |
| 48 | Entfernung |
| 49 | Zwickelbereich |
| 50 | Divergenzwinkel |
| 51 | Führungsnase |
| 52 | Ausnehmung |
| 53 | Abstand |
| 54 | Ringzone |
| 55 | Ringzone |
| 56 | Ringzone |
| 57 | Ringzone |
| 58 | Hauptebene |
| 59 | Öffnungswinkel |
| 60 | Lichtstrahl |
| 61 | Lichtstrahl |
| 62 | Lichtstrahl |
| 63 | Lichtbündel |
| 64 | Oberfläche |
| 65 | Umlenklinse |
| 66 | Lichtstrahl |
| 67 | Oberfläche |
| 68 | Lichtstrahlenbündel |
| 69 | Ablenkungswinkel |
| 70 | Oberfläche |
| 71 | Einfallswinkel |
| 72 | Auftreffpunkt |
| 73 | Achse |
| 74 | Normale |
| 75 | Tangente |
| 76 | Schnittpunkt |
| 77 | Ablenkwinkel |
| 78 | Einfallswinkel |
| 79 | Normale |
| 80 | Ablenkungswinkel |
| 81 | Tangente |
| 82 | Einfallswinkel |
| 83 | Normale |
| 84 | Ausfallswinkel |

**Patentansprüche**

1.  Signalanordnung (1) mit einer in einem Lampengehäuse (10) angeordneten Lampe (12), und mit einem von dieser distanzierten Strahler (3), mit einer Frontscheibe (24) und einer zwischen dem Lampengehäuse (10) und dem Strahler (3) angeordneten Lichtübertragungsvorrichtung die eine Mehrzahl von Lichtleitern (8) umfaßt und mit einer jedem dem Strahler (3) zugewandten Ende (32) jedes Lichtleiters (8), zugeordneten eigenen unabhängigen, transparenten Linse (28), die auf der Lichtaustrittsseite als Fresnellinse ausgebildet ist und in deren endlichen Brennpunkt (27) das Ende eines Lichtleiters (8) angeordnet ist und deren Außendurchmesser (47) einem Hüllkreisdurchmesser des Lichtbündels (33) in einer der Brennweite entsprechenden Distanz (29) von der Lichtaustrittsfläche entspricht, wobei die Linsen (28) annähernd hyperbel- oder kugelkalotten- bzw. parabelförmig ausgebildet sind, dadurch gekennzeichnet, daß die Linsen (28) mit ihrer konvexen Seite dem Seite dem Ende (32) des Lichtleiters zugeordnet sind und daß im Strahlenbündelquerschnitt, insbesondere auf der der Linse (28) zugewendeten Seite der Frontscheibe (24), zumindest eine Umlenklinse (65) angeordnet ist, mit der ein Lichtstrahlbündel (68) geformt und unter einem Ablenkwinkel (69) zu einer optischen Achse (73) einer der Linsen (28) abgelenkt ist.

2.  Signalanordnung nach Anspruch 1, dadurch gekennzeichnet, daß eine auf die Frontscheibe (24) projizierte Fläche der Umlenklinse (65) kleiner ist als der Strahlenbündelquerschnitt und bevorzugt zwischen 5 und 50 % beträgt.

3.  Signalanordnung nach Anspruch 1 oder 2, dadurch gekennzeichnet, daß die dem Strahler (3) zugeordneten Linsen (28) auf einer diesen gemeinsam Linsentragplatte (26) angeordnet sind, die gegenüber der Frontscheibe (24) verdrehsicher geführt ist.

4.  Signalanordnung nach einem oder mehreren der Ansprüche 1 bis 3, dadurch gekennzeichnet, daß die Enden (32) jedes Lichtleiters (8) in einem hülsenförmigen Führungsnippel (30) angeordnet sind, die in einer Bohrung (31) in einer Führungsplatte (37) gehaltert und in einem Raster über die Oberfläche der Führungsplatte (37) verteilt sind, der dem Rastermaß der Linsenachsen der Linsen (28) entspricht und daß eine den Linsen (28) zugewandte Oberfläche der Führungsplatte im Brennpunktabstand von den Linsen (28) angeordnet ist.

5.  Signalanordnung nach einem oder mehreren der Ansprüche 1 bis 4, dadurch gekennzeichnet, daß die Führungsplatte (37) in ein Gehäuse für die Frontscheibe (24) integriert ist und vorzugsweise eine Bodenplatte des Gehäuses (23) bildet.

6.  Signalanordnung nach Anspruch 4 oder 4 und 5, dadurch gekennzeichnet, daß die Distanz (29) zwischen den Linsen (28) und der Führungsplatte (37) durch über die Führungsplatte (37) in Richtung der Linsen (28) vorragende, sich in den Zwickelbereichen (49) zwischen den einzelnen Linsen abstützende Stützstege (41) eingehalten ist.

## Claims

1. Apparatus for light signals (1) comprising a lamp housing (10) with a lamp (12) disposed therein, and at a distance therefrom a projector (3) provided with a transparent front cover (24), and arranged between the lamp housing (10) and the projector (3) a light transmission device which comprises a plurality of fibre-optic light guides (8) and arranged at each end (32) of each fibre-optic light guide (8) facing towards the projector (3) its own independent, transparent lens (28), which, at the side of the exiting light is formed as a Fresnel lens and in the real focal point (27) of which, an end of the fibre-optic light guide (8) is arranged, ad the outer diameter (47) of which corresponds to the diameter of an enveloping circle of the luminous beam (33) at a distance (29) from the surface of the exiting light which equals the focal distance, whereby the lenses (28) are approximately hyperbolic or spheric or respectively parabolic, characterized in that the convex sides of the lenses (28) are associated with the end (32) of the fibre-optic light guide and that in the cross-section of the beam focussing, in particular on the side of the transparent front cover (24) facing towards the lens (28) a deviation lens (65) is arranged by means of which a light beam concentration (68) is formed and is diverted around a deviation angle (69) to an optical axis (73) of one of the lenses (28).

2. Apparatus for light signals according to claim 1, characterized in that a surface of the deviation lens (65) projected onto the transparent front cover (24) is smaller than the cross-section of the beam concentration and preferably lies between 5 and 50%.

3. Apparatus for light signals according to claims 1 and 2, characterized in that the lenses (28) associated with the projector (3) are arranged on a mutual supporting plate for lenses (26), which is guided in a torsion-proof manner with respect to the transparent front cover (24).

4. Apparatus for light signals according to one or more of claims 1 to 3, characterized in that the ends (32) of each fibre-optic light guide (8)-being disposed in a sleeve-shaped guide nipple (30), are positioned in a bore (31) of a guide plate (37), and are distributed over the surface of the guide plate (37) in a louvre, which corresponds to the louvre size of the lens axes of the lenses (28) and that a surface of the guide plate facing towards the lenses (28) is arranged in the focal distance of the lenses (28).

5. Apparatus for light signals according to one or more of claims 1 to 4, characterized in that the guide plate (37) is embedded in a housing for the transparent front cover (24) and preferably forms a base plate of the housing (23).

6. Apparatus for light signals according to claim 4, or claims 4 and 5, characterized in that the distance (29) between the lenses (28) ad the guide plate (37) is limited by supporting webs (41) projecting beyond the guide plate (37) in the direction of the lenses (28) and supporting themselves in the regions (49) between the individual lenses.

## Revendications

1. Dispositif de signaux lumineux (1) composé d'un corps de lampe (10) et d'une lampe (12) disposée dans celui-ci, et disposé à distance de celle-ci un projecteur (3), avec une glace frontale protectrice (24) et disposé entre le corps de lampe (10) et le projecteur (3) un dispositif de transmission de lumière comprenant une multiplicité des guides de lumière (8) et associée à chaque extrémité (32) de chaque guide de lumière (8) orienté vers le projecteur (3), sa propre lentillle (28) indépendante et transparente, qui est réalisée sur le côté d'émission de lumière sous la forme d'une lentille de Fresnel et disposée dans son foyer fini (27) l'extrémité d'un guide de lumière (8) et dont le diamètre extérieur (47) correspond à un diamètre du cercle enveloppant du faisceau lumineux (33) à une distance (29) de la surface du rayonnement de la lumière qui est égale à la distance focale, à quoi les lentilles (28) sont réalisées à peu près de façon à être hyperbolique ou sous forme d'une calotte sphérique ou respectivement sous forme d'une parabole, caractérisée en ce que les lentilles (28) sont associées avec leurs côtés convexes à l'extrémité (32) du guide de lumière et en ce que dans la section transversale du faisceau de rayons, en particulier sur le côté de la glace frontale protectrice (24) orientée vers la lentille (28) est disposée au moins une lentille de déviation (65) qui forme un faisceau de rayons lumineux (68) et qui dévie celui-ci selon un angle de déviation (69) à un axe optique (73) de l'une des lentilles (28).

2. Dispositif de signaux lumineux selon la revendication 1, caractérisée en ce qu'une surface de la lentille de déviation (65) étant projetée sur la glace frontale protectrice (24) est plus petite que la section transversale du faisceau de rayons et qui, de préférence, est entre 5 et 50%.

3. Dispositif de signaux lumineux selon la revendication 1 ou 2, caractérisée en ce que les lentilles (28) qui sont associées au projecteur (3) sont disposées sur un corps de portelentille commun à tous, qui est guidé de façon à résister à la torsion par rapport à la glace frontale protectrice (24).

4. Dispositif de signaux lumineux selon une ou plusieurs des revendications 1 à 3, caractérisée en ce que les extrémités (32) de chaque guide de lumière (8) sont disposées dans un mamelon de guidage (30) ayant la forme d'un manchon, et sont maintenues dans un alésage (31) d'une plaque de guidage (37) et sont réparties sur la surface de la plaque de guidage (37) dans un volet qui correspond aux dimensions de volet des axes de lentilles (28) et en ce qu'une surface de la plaque de guidage tournée vers les lentilles (28) est disposée à distance focale aux lentilles (28).

5. Dispositif de signaux lumineux selon une ou plusieurs des revendications 1 à 4, caractérisée en ce que la plaque de guidage (37) est integrée dans un boîtier pour la glace frontale protectrice (24) et de préférence, forme une plaque de base du boîtier (23).

6. Dispositif de signaux lumineux selon la revendication 4 ou selon les revendications 4 et 5, caractérisée en ce que la distance (29) entre les lentilles (28) et la plaque de guidage (37) est respectée en direction des lentilles (28) par l'intermédiaire des barres d'appui (41) faisat saillie au-dessus de la plaque de guidage (37) qui s'appuient dans les alvéoles(49) entre les lentilles individuelles.

**Fig.1**

**Fig.2**

**Fig.3**

**Fig. 4**

**Fig. 5**

**Fig. 7**

# Fig.6